# FASCICULE DE BREVET EUROPEEN

(11) **EP 3 776 094 B1**
(45) Date de publication et mention de la délivrance du brevet: **30.07.2025**
(21) Numéro de dépôt: 19712188.2
(22) Date de dépôt: 20.03.2019
(51) Int. Cl.: G04B 19/10, G04B 19/12, G04D 3/00

(54) **PROCÉDÉ ET SYSTÈME DE FABRICATION D'AU MOINS UN ÉLÉMENT HORLOGER DESTINÉ À ÊTRE RAPPORTÉ SUR UN COMPOSANT HORLOGER D'UNE PIÈCE D'HORLOGERIE**
HERSTELLUNGSVERFAHREN UND -SYSTEM MINDESTENS EINES UHRENELEMENTS ZUM ANBRINGEN AUF EINER UHRENKOMPONENTE EINER UHR
METHOD AND SYSTEM FOR PRODUCING AT LEAST ONE TIMEPIECE ELEMENT INTENDED FOR BEING ATTACHED TO A TIMEPIECE COMPONENT OF A TIMEPIECE

(30) Priorité: 29.03.2018 EP 18165061
(43) Date de publication de la demande: 17.02.2021
(73) Titulaire: ETA SA Manufacture Horlogère Suisse, 2540 Grenchen (CH)
(72) Inventeur: ENGGIST, Yann, 3232 Ins (CH); SCHLAPPACH, Marc, 4800 Zofingen (CH); JEANRENAUD, Frédéric, 2300 La Chaux-de-Fonds (CH)
(74) Mandataire: ICB SA
(86) Numéro de dépôt international: PCT/EP2019/056986
(87) Numéro de publication internationale: WO 2019/185422

(56) Documents cités:
- CH-A- 354 028
- CH-A- 395 870

## Description

### Domaine de l'invention

L'invention se porte sur un procédé et un système de fabrication d'au moins un élément horloger, notamment d'une applique, destiné à être rapporté sur un composant horloger tel qu'un cadran d'une pièce d'horlogerie.

L'invention porte aussi sur un élément horloger pour un composant horloger ainsi que sur ce composant horloger comprenant au moins un élément horloger.

L'invention porte également sur une pièce d'horlogerie comportant un tel composant horloger.

### Arrière-plan de l'invention

Dans l'état de la technique, les éléments horlogers tels que les appliques prévues pour être disposées sur des cadrans de montres, sont le plus souvent réalisées à partir de procédés mettant en œuvre des techniques de décalque, voire de sérigraphie ou encore de matriçage de la surface inférieure du cadran avec les parties en relief formant les appliques qui sont alors dans ce contexte polies, vernies, ou recouvertes d'un pigment luminescent. Ces appliques peuvent également être des pièces rapportées sur le cadran en étant produites à partir de procédés mettant en œuvre des techniques d'étampage/d'usinage d'une plaque métallique puis de collage, par exemple au moyen d'une colle durcissable à chaud.

Lorsqu'on veut obtenir des pièces de grande qualité, les appliques sont alors le plus souvent pourvues de pieds pour leur fixation sur le cadran par collage, soudage ou encore rivetage. Les appliques sont ébauchées à partir de procédés mettant en œuvre des techniques d'usinage ou d'étampage dans un profilé, puis repris pour facettage. Cependant un des inconvénients de tels procédés est lié au fait qu'ils peuvent être la cause de la présence d'imperfections sur les surfaces de ces appliques.

De plus, ces différents procédés requièrent souvent beaucoup de manutention de la part des opérateurs, ce qui s'avère long et fastidieux étant donné la petite taille des pièces à manipuler, en particulier la mise en cadran.

Le document CH354028 décrit un procédé de fabrication de cadrans d'horlogerie et un outillage pour la mise en œuvre de ce procédé.

### Résumé de l'invention

Le but de la présente invention est de pallier en tout ou partie les inconvénients cités précédemment en proposant un procédé et un système pour la mise en œuvre de ce procédé permettant de fabriquer des composants horlogers de grande qualité plus rapidement en limitant les opérations manuelles.

A cet effet, l'invention porte sur un procédé de fabrication selon la revendication 1.

Dans d'autres modes de réalisation :
- la technique de lithographie pour l'élaboration de l'empreinte est choisie parmi les techniques suivantes : lithographie optique par projection ultraviolet, lithographie optique par projection DUV acronyme de « Deep Ultra-Violet », lithographie à immersion, lithographie double exposition, lithographie extrême ultra-violet, lithographie par nanoimpression ;
- l'étape d'élaboration comprend une sous-étape de réplication de la pièce originale visant à réaliser l'empreinte par la reproduction d'une forme négative de la pièce originale mettant en œuvre des techniques de réplication Ni shims ou BMG ;
- l'étape de réalisation d'une ébauche de l'élément horloger comprend une sous-étape de formation du moule par assemblage de première, deuxième et troisième pièces entre elles ;
- la sous-étape de surmoulage comprend une phase de régulation de la température dudit moule notamment durant une période s'étalant avant le début de la phase d'injection de matière injectable dans la cavité jusqu'à la fin de cette phase injection de matière voire après cette fin de cette phase d'injection ;
- la sous-étape de surmoulage comprend une phase de mise sous vide de ladite cavité avant la phase d'injection de la matière injectable dans cette cavité.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation d'un système de fabrication d'au moins un élément horloger, notamment d'une applique, destiné à être rapporté sur un composant horloger tel qu'un cadran d'une pièce d'horlogerie, selon un mode de réalisation de l'invention ;
- la figure 2 est une vue en coupe d'une partie d'un moule du système, selon un mode de réalisation de l'invention ;
- la figure 3 est un logigramme relatif à un procédé de fabrication d'au moins un élément horloger, notamment de l'applique, destiné à être rapporté sur le composant horloger tel qu'un cadran d'une pièce d'horlogerie, selon un mode de réalisation de l'invention ;
- les figures 4A, 4B et 4C sont des vues en coupe de différentes variantes d'ébauches d'élément horloger surmoulées sur une deuxième pièce du moule du système formant une plaquette de support de ces ébauches, selon un mode de réalisation de l'invention ;
- la figure 5 est une vue des ébauches d'élément horlogers reliées toutes à une carotte formée essentiellement par une troisième pièce du moule non représentée ici tout comme la deuxième pièce du moule sur laquelle ces ébauches sont supportées pour une meilleure compréhension de l'invention, selon un mode de réalisation de cette invention ;
- la figure 6 est une vue de la carotte comprenant les ébauches d'élément horloger surmoulées sur la deuxième pièce, selon un mode de réalisation de cette invention ;
- la figure 7 est une vue des première et deuxième pièces du moule assemblées ensemble sans la troisième pièce, selon un mode de réalisation de l'invention ;
- la figure 8 représente l'élément horloger tel qu'une applique comprenant deux pieds de fixation et qui est supportée sur la deuxième pièce du moule, selon un mode de réalisation de l'invention ;
- la figure 9 représente l'élément horloger tel qu'une applique dépourvue de pieds de fixation et qui est supportée sur la deuxième pièce du moule, selon un mode de réalisation de l'invention, et
- la figure 10 représente une pièce d'horlogerie comprenant un composant horloger pourvu d'au moins un élément horloger, selon un mode de réalisation de l'invention.

### Description détaillée des modes de réalisation préférés

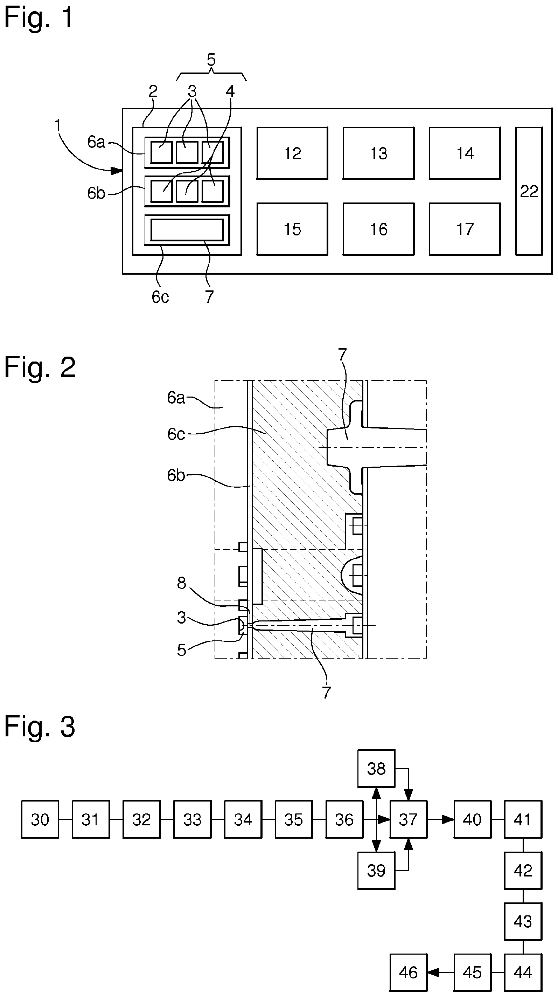

En référence à la figure 1, l'invention se rapporte à un système de fabrication 1 d'au moins un élément horloger 10b, notamment d'une applique, destiné à être rapporté sur/dans un composant horloger 110 tel qu'un cadran d'une pièce d'horlogerie 100. Un tel système 1 est apte à être mis en œuvre au sein d'une installation automatique d'assemblage (ou chaîne d'assemblage automatique) dédiée à la fabrication de tout ou partie d'une pièce d'horlogerie 100. En pareil contexte, ce système 1 participe à fabriquer et à assurer la distribution d'éléments horlogers au sein de cette installation d'assemblage automatique.

On notera de manière non limitative et non exhaustive que cet élément horloger 10b peut être une applique, un insert, un index ou encore un élément de rouage, etc. En outre s'agissant du composant horloger 110, ce dernier peut être un cadran, un mécanisme d'un mouvement horloger, un réhaut ou encore une lunette, etc.

Un tel système 1 comprend de manière non exhaustive et non limitative :
- un moule 2 formé par l'assemblage réversible de trois pièces reliées entre elles :
   - une première pièce 6a comprenant au moins une empreinte 3 relative à l'élément horloger 10b à fabriquer ;
   - une deuxième pièce 6b comprenant une plaquette de support de chaque élément horloger 10b fabriqué, et
   - une troisième pièce 6c ayant la forme d'une plaque.
- un dispositif d'injection 12 d'une matière injectable dans ce moule 2 ;
- un dispositif d'application 13 d'un revêtement sur une ébauche de l'élément horloger 10b surmoulée sur la deuxième pièce 6b ;
- un dispositif de conception 14 d'une pièce originale encore appelée « master » relative à l'élément horloger 10b à fabriquer, mettant notamment en œuvre des techniques de lithographie en particulier de lithographie optique par projection ultraviolet, de lithographie optique par projection DUV (acronyme de « Deep Ultra-Violet »), de lithographie à immersion, de lithographie double exposition, de lithographie extrême ultra-violet et/ou de lithographie par nanoimpression ;
- un dispositif d'élaboration 15 de l'empreinte 3 à partir de la pièce originale mettant notamment en œuvre des techniques de réplication Ni shims ou BMG ;
- un dispositif de mise sous vide 16 dudit moule 2 et/ou un dispositif de régulation 17 de la température au sein du moule 2, et
- un dispositif d'extraction 22 de l'élément horloger 10b du moule 2 notamment de la deuxième pièce 6b de ce moule 2.

Sur les figures 1 et 2, dans ce moule 2, l'assemblage de la première pièce 6a avec la deuxième pièce 6b définit au moins une cavité 5 du moule 2. Cette première pièce 6a du moule 2 comprend une face interne pouvant être pourvue d'une unique empreinte 3 ou encore de plusieurs empreintes 3 relatives chacune à un élément horloger 10b à fabriquer. Ces empreintes 3 comprennent une forme creuse définie dans cette face interne plane de la première pièce 6a. On notera que dans cette configuration, ce moule 2 comprend autant de cavités 5 que cette première pièce 6a comporte d'empreintes 3.

Dans ce contexte, lorsque le système 1 est pourvu du dispositif de régulation 17 de la température au sein dudit moule 2, la première pièce 6a peut alors comprendre un circuit défini dans le corps de cette première pièce 6a qui est essentiellement agencé en dessous de chaque empreinte 3. Un tel circuit est raccordé au dispositif de régulation 17 de la température qui est alors apte à engendrer la circulation d'un fluide de refroidissement ou un fluide de chauffage dans ce circuit.

En complément, on notera que la deuxième pièce 6b comprend une face interne comprenant une zone 4 définie pour former avec ladite empreinte 3 cette cavité 5 dans laquelle cavité 5 la matière injectable est injectée et ce, de manière à participer à la conception de ladite ébauche 10a de l'élément horloger 10b. Cette cavité 5 définit la forme finale de l'élément horloger 10b qui est à la fois réalisée par l'empreinte 3 mais également par la zone 4 correspondante de la face interne de la deuxième pièce 6b qui est alors agencée en regard de cette empreinte 3 lorsque les première et deuxième pièce 6bs sont assemblées l'une à l'autre.

Dans ce moule 2, cette deuxième pièce 6b est de préférence une plaque de faible épaisseur présentant des faces interne et externe qui sont planes. La face interne de cette deuxième pièce 6b est destinée à être en contact avec la face interne de la première pièce 6a lorsque ces première et deuxième pièces 6a, 6b sont assemblées l'une avec l'autre. L'épaisseur de cette deuxième pièce 6b est de préférence inférieure à celles des première et troisième pièces 6a, 6c de ce moule 2. Une telle deuxième pièce 6b est agencée dans ce moule 2 en étant prise en sandwich entre les première et troisième pièces 6a, 6c. Cette deuxième pièce 6b comprend aussi au moins un canal traversant 8 reliant ses faces interne et externe entre elles, chaque canal traversant 8 comprenant une première extrémité débouchant dans chaque cavité 5 correspondante du moule 2 et une deuxième extrémité débouchant sur la face externe de cette deuxième pièce 6b. On comprend que la deuxième pièce 6b comprend au moins autant de canaux traversants 8 que le moule 2 comprend de cavités 5.

De plus, on notera que cette deuxième pièce 6b participe également à la manipulation de cette ébauche 10a de l'élément horloger 10b lors la réalisation des différentes étapes aboutissant à la de fabrication de cet élément horloger 10b notamment lors de l'application du revêtement sur ce dernier. Et enfin, cette deuxième pièce 6b participe aussi à la manipulation de l'élément horloger 10b en prévision de son montage sur le composant horloger 110.

Ainsi que nous l'avons évoqué précédemment, ce moule 2 comprend aussi une troisième pièce 6c qui est prévue pour être assemblée sur la face externe de la deuxième pièce 6b. Cette troisième pièce 6c comprend au moins un circuit d'injection 7 de matière injectable relié en une première extrémité au dispositif d'injection 12 et en une deuxième extrémité à chaque canal traversant 8 de la deuxième pièce 6b. On notera que lorsque le système 1 est pourvu du dispositif de mise sous vide 16 dudit moule 2, la troisième pièce 6c peut alors comprendre un circuit de vide défini dans le corps de cette troisième pièce 6c et qui est relié à une extrémité à chaque canal traversant 8 de la deuxième pièce 6b ainsi qu'à une autre extrémité à ce dispositif de mise sous vide 16 apte à provoquer un vide d'air dans chaque cavité 5 du moule 2. Dans cette configuration, on comprend que l'une des fonctions de la troisième pièce 6c est d'assurer l'acheminement de la matière injectable vers le canal traversant 8 d'injection de matière et de participer le cas échéant à mettre sous vide la cavité 5 du moule 2.

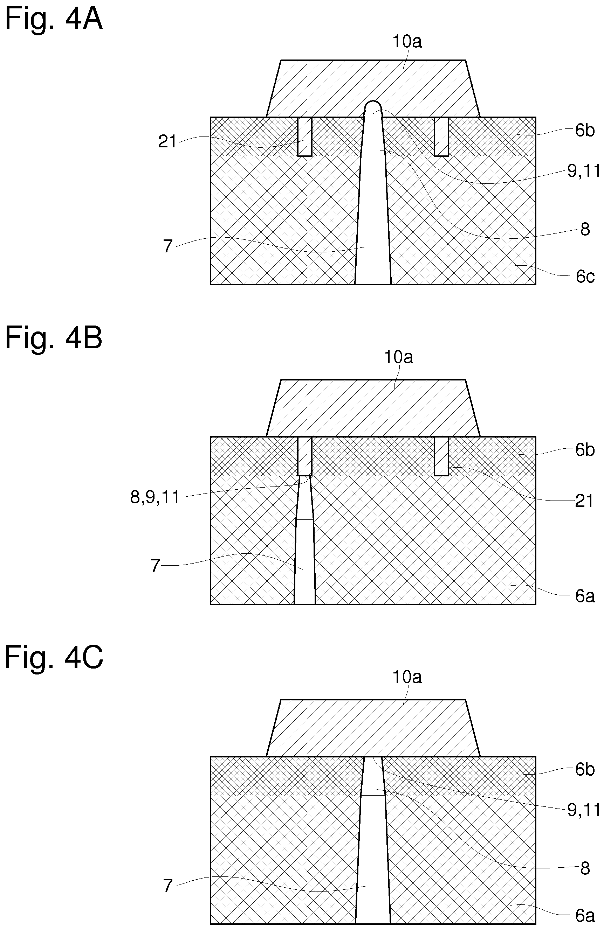

En référence aux figures 4A à 7, lorsque cet élément horloger 10b est une applique il peut comprendre au moins un pied 21 ou au contraire en être dépourvu. Lorsque l'élément horloger 10b est dépourvu d'un pied 21, la cavité 5 est formée par l'assemblage d'une empreinte 3 comprise dans la face interne de la première pièce 6a avec la zone 4 correspondante de la face interne de la deuxième pièce 6b. Dans ce contexte, cette zone 4 correspondante de la face interne de la deuxième pièce 6b qui participe à la formation de cette cavité 5 comprend un orifice d'entrée 9 de la matière injectable dans cette cavité 5. Cet orifice d'entrée 9 forme la première extrémité du canal traversant 8 ménagé dans la deuxième pièce 6b qui débouche dans la cavité 5 et dont la deuxième extrémité est reliée au dispositif d'injection 12 de matière injectable par l'intermédiaire du circuit d'injection 7 défini dans la troisième pièce 6c.

Lorsque l'élément horloger 10b comprend au moins un pied 21, la cavité 5 est formée par l'assemblage d'une empreinte 3 comprise dans la face interne de la première pièce 6a avec la zone 4 correspondante de la face interne de la deuxième pièce 6b pourvue d'au moins un logement prévu pour la formation dudit au moins un pied 21. Cette face interne de la deuxième pièce 6b comprend autant de logements que l'élément horloger 10b comporte de pieds 21. Un logement ménagé dans la face interne de la deuxième pièce 6b correspond à un trou borgne ou encore à un trou comportant en son fond l'unique orifice d'entrée 9 de la matière injectable dans la cavité 5. Comme évoqué précédemment, cet orifice d'entrée 9 forme la première extrémité du canal traversant 8 ménagé dans la deuxième pièce 6b qui débouche dans la cavité 5 et dont la deuxième extrémité est reliée au dispositif d'injection 12 de matière injectable par l'intermédiaire du circuit d'injection 7 défini dans la troisième pièce 6c. On notera que dans cette configuration, lorsque la cavité 5 comprend un ou plusieurs logements correspondant à des trous borgnes, l'orifice d'entrée 9 est alors défini dans une zone 4 correspondante de la face interne de la deuxième pièce 6b dépourvue bien sûr de telles logements.

On notera que la portion de matière injectable qui est solidifiée dans l'orifice d'entrée 9 de la cavité 5 forme un point d'injection 11 qui est défini pour être rompu notamment lors de la désolidarisation de l'élément horloger 10b fabriqué de la deuxième pièce 6b comme cela est décrit par la suite. En effet, ce point d'injection 11 assure le maintien de l'élément horloger 10b fabriqué sur la deuxième pièce 6b en le liant à une carotte 18 formée dans ce moule 2. On notera que cette carotte 18 comprend une première partie 19b formée par la solidification de la matière injectable dans le canal traversant et/ou l'orifice d'entrée de la cavité 5, et une deuxième partie 19a formée par la solidification de la matière injectable dans le circuit d'injection ménagé dans la troisième pièce 6c.

En référence à la figure 4A, on remarquera que lorsque la cavité 5 est définie pour former un élément horloger 10b comprenant au moins un pied 21 avec un orifice d'entrée 9 compris dans le fond du logement prévu pour la formation dudit pied 21, le canal traversant 8 est confondu avec cet orifice d'entrée 9.

En outre, dans cette configuration, on comprend bien que l'empreinte 3 vient former la partie visible de l'élément horloger 10b tel qu'une applique lorsqu'elle est montée sur un cadran et la zone 4 correspondante de la deuxième pièce 6b formant quant à elle la partie de liaison de cette applique avec le cadran à partir des pieds de cet applique ou d'une face non visible de cette dernière.

Dans ce système 1, le dispositif d'application 13 d'un revêtement sur une ébauche 10a de l'élément horloger 10b surmoulée sur la deuxième pièce 6b est apte à appliquer/déposer un revêtement comprenant une matière décorative de type métallique et/ou une matière fonctionnelle sur la surface externe de l'ébauche 10a de l'élément horloger 10b. Un tel dispositif 13 peut comprendre un module d'impression pourvu notamment d'un organe d'éjection de cette matière décorative et/ou fonctionnelle, et/ou d'un organe de pulvérisation d'une telle matière et/ou d'un organe de pulvérisation d'une pellicule/film comportant une telle matière. On notera que l'organe de pulvérisation peut être un organe de pulvérisation cathodique par courant continu ou encore un organe de pulvérisation magnétron pulsé à haute puissance plus connu sous l'acronyme HIPIMS pour « High Power Impulse Magnetron Sputtering ». On notera que d'autres techniques peuvent être mises en œuvre comme celles dites de « transfert à chaud » du revêtement sur l'ébauche.

Dans ce système 1, la matière décorative peut être formée d'une encre, ou encore d'un métal ou d'un alliage métallique. Cette matière décorative participe à modifier l'aspect esthétique de l'élément horloger 10b en étant appliquée sur l'ébauche 10a de cet élément horloger 10b. S'agissant de la matière fonctionnelle, elle vise à conférer à l'élément horloger 10b des caractéristiques fonctionnelles physiques et/ou chimiques liées par exemple à :
- la conductivité électrique, caractère semi-conducteur ou isolant ;
- la semi-conductivité ;
- l'électroluminescence ;
- la photoluminescence (par exemple une réaction à un rayonnement ultraviolet) ;
- la phosphorescence ;
- « X-chromisme » (photochrome, électrochrome, thermochrome, ionochrome, mécanochrome...) ;
- l'électroactivation ;
- le magnétisme ;
- etc.

Dans ce système 1, la matière injectable utilisée est par exemple une matière organique et/ou composite, ou une matière métallique ou céramique ou encore une matière thermodéformable, thermodurssissable, ou thermoplastique. A titre d'exemples cette matière peut comprendre les éléments suivants :
- plastique chargé type SLN (phosphorescent) et pigments de couleur et/ou fluorescent ;
- polymère chargé en céramique avec et sans pigment de couleur ;
- un additif permettant de donner un aspect métallique/brillant, type poudre en aluminium, poudre métallique ;
- additif permettant de rendre conducteur le polymère (pour des raisons techniques ou pour un post traitement chimique/galvanique ou autre) ;
- additif donnant un rendu esthétique recopiant un matériau (nacre, pierre...) ;
- additif donnant des caractéristiques mécaniques et/ou tribologiques particulières ;
- BMG plus connue sous l'acronyme « Bulk Metallic Glass » ;
- matière inoxydable ;
- matière métallique frittable ;
- céramique ;
- silicon, et/ou
- combinaison d'un ou l'autre de ces éléments entre eux ou plusieurs de ces derniers entre eux.

Dans cette configuration, on comprend bien qu'un tel système 1 permet de fabriquer plusieurs composants horlogers 110 de manière simultanée avec une première pièce 6a comprenant alors plusieurs empreintes 3 et étant apte à participer avec notamment la deuxième pièce 6b à l'obtention d'une série de composants horlogers 110 surmoulés sur cette deuxième pièce 6b. En étant ainsi surmoulés sur une même deuxième pièce 6b, ces composants horlogers 110 peuvent être facilement distribués dans l'installation d'assemblage automatique de tout ou partie d'une pièce d'horlogerie 100. En alternative, on comprend bien que la première pièce 6a peut comprendre une unique empreinte 3 relative à l'élément horloger 10b à fabriquer.

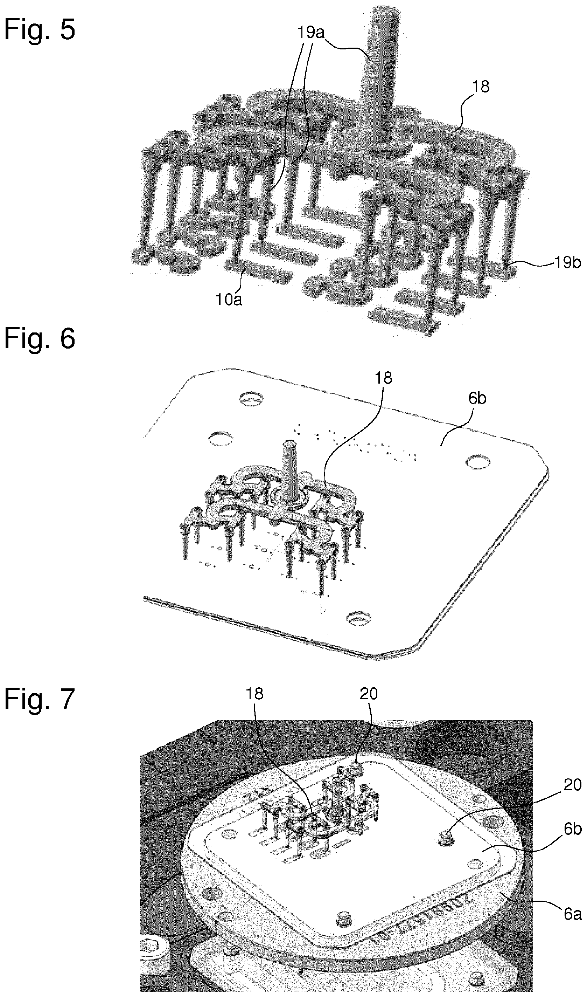

Par ailleurs, on notera que la deuxième pièce 6b et la première pièce 6a peuvent comprendre au moins un élément de positionnement 20 (visible sur la figure 6) de cette deuxième pièce 6b relativement à cette première pièce 6a de manière à assurer le positionnement de la zone 4 correspondante de la deuxième pièce 6b en regard de l'empreinte 3 correspondante.

En référence à la figure 3, ce système 1 met en œuvre un procédé de fabrication d'au moins un élément horloger 10b, notamment d'une applique, destiné à être rapportée sur un composant horloger 110 tel qu'un cadran d'une pièce d'horlogerie 100.

Un tel procédé comprend une étape d'élaboration 30 de l'empreinte 3 dans la première pièce 6a à partir d'une pièce originale relative à l'élément horloger 10b devant être fabriqué. On comprend que cette étape 30 est apte à participer à la réalisation d'autant d'empreintes 3 qu'il y a d'éléments horlogers 10b à fabriquer et ce, de manière à ce que de telles empreintes 3 soient comprises sur une même première pièce 6a. Cette étape 30 prévoit la réalisation d'une empreinte 3 à partir d'une pièce originale autrement appelée « master ». Cette pièce originale a une forme similaire à celle de l'élément horloger 10b devant être fabriqué. On notera que la mise en œuvre de cette étape 30 peut requérir autant de pièces originales qu'il y a d'empreintes 3 à réaliser.

Dans ce contexte, l'étape d'élaboration 30 comprend une sous-étape de conception 31 de ladite pièce originale mise en œuvre à partir d'une technique de lithographie. Cette technique de lithographie est choisie parmi les techniques suivantes connues de l'état de la technique et qui ne sont pas décrites plus en détail ici : lithographie optique par projection ultraviolet, lithographie optique par projection DUV, lithographie à immersion, lithographie double exposition, lithographie extrême ultra-violet, lithographie par nanoimpression.

Cette étape d'élaboration 30 comprend ensuite une sous-étape de réplication 32 de la pièce originale visant à réaliser l'empreinte 3 par la reproduction d'une forme négative de la pièce originale. Cette sous-étape 32 prévoit en particulier la mise en œuvre de techniques de réplication du type Ni shims ou BMG (acronyme « Bulk Metallic Glass ») connues de l'état de la technique et qui ne sont pas décrites plus en détail ici.

Par la suite, le procédé comprend une étape de réalisation 33 d'une ébauche 10a de l'élément horloger 10b à partir d'un surmoulage par injection de matière injectable dans au moins une cavité 5 du moule 2. On notera que qu'une telle cavité 5 est définie pour l'élaboration/la formation de l'élément horloger. Autrement dit, cette cavité 5 du moule 5 en étant formée par l'association d'au moins une empreinte de la première pièce 6a du moule 5 avec une deuxième pièce 6b de ce moule 5, définie un espace correspondant au volume et à la forme de l'élément horloger qui est ici réalisé. Cette étape de réalisation 33 comprend une sous-étape de formation 34 du moule 2 par l'assemblage des première, deuxième et troisième pièces 6a, 6b, 6c entre elles. Cette sous-étape 34, prévoit une phase d'assemblage 35 réversible de la troisième pièce 6c avec la deuxième pièce 6b qui est elle-même assemblée à la première pièce 6a. Cet assemblage est réalisé de manière à former la ou les cavités 5 du moule 2 et aussi d'assurer une connexion optimale entre le circuit d'injection 7 ménagé dans la troisième pièce 6c et le ou les canaux traversants 8 définis dans la deuxième pièce 6b

Cette étape 33 comprend ensuite une sous-étape de surmoulage 36 par injection de la matière injectable dans la cavité 5 comprise dans le moule 2. Cette sous-étape 36 vise à réaliser un surmoulage de l'ébauche 10a 10a de l'élément horloger 10b sur la zone 4 correspondante de la face interne de la deuxième pièce 6b. Cette sous- étape 36 comprend une phase d'injection 39 dans cette cavité 5 de la matière injectable provenant du dispositif d'injection 12 de cette matière. Dans ce contexte, la matière injectable provenant du dispositif d'injection 12 est introduite dans la cavité 5 en parcourant le circuit d'injection 7 de matière injectable défini dans la troisième pièce 6c et le canal traversant 8 compris dans la deuxième pièce 6b reliant ce circuit d'injection 7 à ladite cavité 5. Ainsi, la matière injectable vient alors occuper tout le volume défini dans la cavité 5 en venant surmouler la zone correspondante de la face interne de la deuxième pièce 6b agencée en regard de l'empreinte 3 dans l'optique de former cette ébauche 10a de l'élément horloger 10b.

Une telle sous-étape de surmoulage 36 peut comprendre les phases suivantes :
- une phase de mise sous vide 37 de ladite cavité 5 avant la réalisation de la phase d'injection 39 de la matière injectable dans cette cavité 5, et/ou
- une phase de régulation de la température 38 de la cavité 5 notamment durant une période s'étalant avant le début de la phase d'injection 39 de matière injectable dans la cavité 5 jusqu'à la fin de cette phase injection 39 de matière voire après cette fin de cette phase infection 39.

De telles phases de mise sous vide 37 et de régulation de la température 38 visent à assurer une homogénéité structurelle de l'ébauche 10a de l'élément horloger 10b lors de son surmoulage sur la deuxième pièce 6b afin de supprimer la présence de tout défaut susceptible d'être présent sur la face externe visible de cette ébauche 10a. Un tel défaut peut par exemple résider en la présence d'une ligne de soudure sur la face externe visible de l'ébauche 10a, formée suite à la jonction de deux flux d'écoulement de matière injectable dans la cavité 5. Une telle ligne de soudure est souvent présente sur des ébauches 10a d'éléments horlogers 10b relatifs à des appliques présentant la forme d'un chiffre 6, 8 ou encore 0.

Lors de la mise en œuvre de la phase de mise sous vide 37, le fluide présent dans la cavité 5 par exemple un gaz comme l'air est alors évacué de la cavité 5 avant la réalisation de la phase d'injection.

Lors de la réalisation de la phase de régulation de la température 38 de la cavité 5, la température de la cavité 5 est alors portée à une température qui est supérieure ou sensiblement supérieure à la température de la matière injectable provenant du dispositif d'injection 12 de cette matière et ce, avant la réalisation de la phase d'injection. Par la suite, une fois la phase d'injection 39 de la matière injectable réalisée c'est-à-dire achevée, la cavité 5, est aussitôt refroidie.

Le procédé comprend ensuite, une étape de finalisation 40 de l'élément horloger 10b comprenant une sous-étape d'application 41 d'un revêtement sur ladite ébauche 10a de cet élément horloger 10b surmoulée sur la deuxième pièce 6b. Autrement dit, une telle étape est une étape de finalisation 40 de l'élément horloger 10b comprenant une sous-étape d'application 41 d'un revêtement sur ladite ébauche 10a de cet élément horloger 10b surmoulée sur la deuxième pièce 6b après un retrait préalable de la première pièce 6a de la deuxième pièce 6b. Plus précisément, cette sous-étape 41 comprend une phase de désassemblage/retrait 42 de la première pièce 6a de la deuxième pièce 6b et une phase de dépôt 43 de la matière décorative et/ou fonctionnelle sur la face externe visible de l'ébauche 10a de l'élément horloger 10b surmoulée sur cette deuxième pièce 6b. A titre d'exemple, cette phase de dépôt peut prévoir l'application sur cette face externe de l'ébauche 10a d'une matière décorative comprenant une composition métallique. Une telle phase dépôt peut alors être réalisée selon une technologie mettant en œuvre une pulvérisation cathodique par courant continu ou encore une pulvérisation magnétron pulsé à haute puissance plus connu sous l'acronyme HIPIMS pour « High Power Impulse Magnetron Sputtering ».

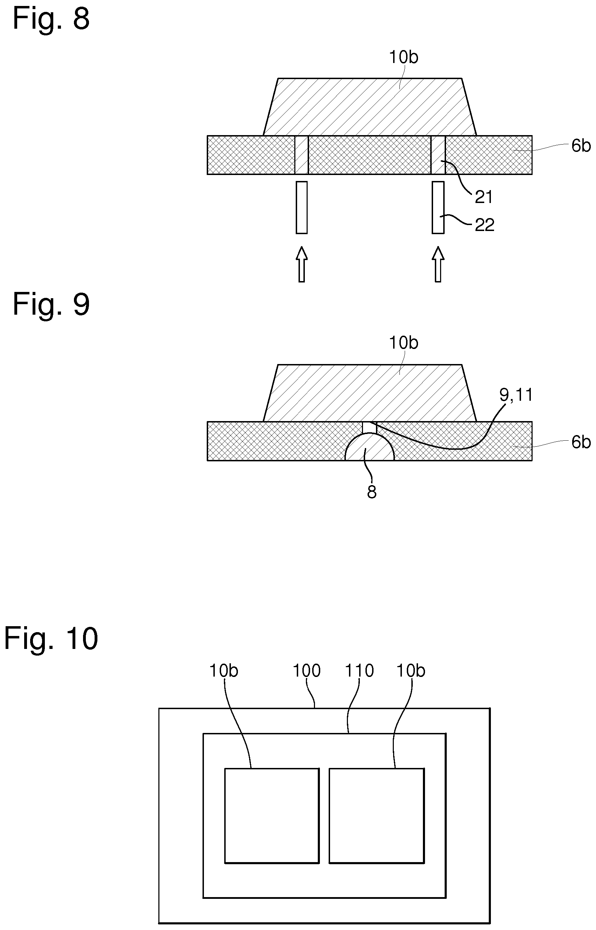

Le procédé prévoit ensuite une étape de retrait 44 de l'élément horloger 10b de la deuxième pièce 6b. Cette étape 44 comprend une sous-étape de rupture 45 du point d'injection 11 liant ledit élément horloger 10b à la deuxième pièce 6b et ce, en prévision de son montage sur le composant horloger 110. Cette étape 44 comprend une sous-étape d'application 46 d'une force sur la deuxième pièce 6b et/ou sur l'élément horloger 10b visant à provoquer un déplacement en rotation ou en translation de de cet élément horloger 10b relativement à la deuxième pièce 6b. A titre d'exemple, en référence aux figures 8 et 9, lorsque l'élément horloger 10b est une applique, la force est alors appliquée sur les pieds 21 de cette applique à partir d'un extracteur du dispositif d'extraction 22 afin de provoquer son déplacement en translation par rapport à la deuxième pièce 6b. Si cette applique est dépourvue de pied 21, la force est alors appliquée sur la face visible de l'élément horloger 10b afin d'engendrer son déplacement en rotation par rapport à la deuxième pièce 6b et provoquer la rupture du point d'injection.

Une fois l'élément horloger 10b extrait de cette deuxième pièce 6b, alors ce dernier est monté sur le composant horloger 110. Lorsque cet élément horloger 10b est une applique et le composant un cadran, ce dernier peut comprendre des ouvertures aptes à coopérer avec les pieds 21 de l'applique pour son montage sur ce cadran. La fixation des pieds dans ces ouvertures peut être réalisée à partir d'une colle notamment une colle qui est apte à assurer cette fixation par exemple en changeant d'état sous l'action de techniques relatives :
- à la photosensibilité ;
- à un apport de chaleur ;
- à une réaction à l'humidité dans l'air ;
- à une situation d'anaérobie.

Si cette applique est dépourvue de pieds 21 elle est alors fixée sur ce cadran à l'emplacement correspondant à partir par exemple de cette colle thermofusible.

## Revendications

1. Procédé de fabrication d'au moins un élément horloger (10b), notamment d'une applique, destiné à être rapporté sur un composant horloger (110) tel qu'un cadran d'une pièce d'horlogerie (100), ledit procédé comprenant les étapes suivantes :
- élaboration (30) d'une empreinte (3) dans la première pièce (6a) à partir d'une pièce originale relative à l'élément horloger (10b) devant être fabriqué, ladite étape d'élaboration (30) comprenant une sous-étape de conception (31) de ladite pièce originale mise en œuvre à partir d'une technique de lithographie ;
- réalisation (33) d'une ébauche (10a) de l'élément horloger (10b) à partir d'un surmoulage par injection de matière injectable dans au moins une cavité (5) d'un moule (2) définie pour l'élaboration de l'élément horloger (10b) à fabriquer, ladite cavité étant définie par l'association de l'empreinte (3) de la première pièce (6a) du moule (2) avec une deuxième pièce (6b) de ce moule (2), ladite deuxième pièce (6b) comprenant un orifice d'entrée (9) de la cavité (5) pour l'injection de ladite matière dans ladite cavité (5) ;
- finalisation (40) de l'élément horloger (10b) comprenant une sous-étape d'application (41) d'un revêtement sur ladite ébauche (10a) de cet élément horloger (10b) surmoulée sur la deuxième pièce (6b), ladite sous étape (41) comprenant une phase de désassemblage/retrait (42) de la première pièce (6a) de la deuxième pièce (6b) **caractérisé en ce que** la sous-étape d'application (41) d'un revêtement comporte et une phase de dépôt (43) de la matière décorative et/ou fonctionnelle sur la face externe visible de l'ébauche (10a) de l'élément horloger (10b) surmoulée sur cette deuxième pièce (6b), et **en ce que** le procédé comprend l'étape supplémentaire suivante :
- retrait (44) de l'élément horloger (10b) finalisé de la deuxième pièce (6b) comprenant une sous-étape de rupture (45) d'un point d'injection (11) liant ledit élément horloger (10b) à la deuxième pièce (6b) et ce, en prévision de son montage sur le composant horloger (110), ce point d'injection (11) assurant le maintien de l'élément horloger (10b) fabriqué sur la deuxième pièce (6b) en le liant à une carotte (18) formée dans ce moule (2).

2. Procédé selon la revendication précédente, **caractérisé en ce que** ladite technique de lithographie est choisie parmi les techniques suivantes : lithographie optique par projection ultraviolet, lithographie optique par projection DUV, lithographie à immersion, lithographie double exposition, lithographie extrême ultra-violet, lithographie par nanoimpression.

3. Procédé de fabrication selon l'une quelconque des revendications 1 et 2, **caractérisé en ce que** l'étape d'élaboration (30) comprend une sous-étape de réplication (32) de la pièce originale visant à réaliser l'empreinte (3) par la reproduction d'une forme négative de la pièce originale mettant en œuvre des techniques de réplication Ni shims ou BMG.

4. Procédé de fabrication selon l'une quelconque des revendications 1 à 3, caractérisé en que l'étape de réalisation (33) d'une ébauche (10a) de l'élément horloger (10b) comprend une sous-étape de formation (34) du moule (2) par assemblage de première, deuxième et troisième pièces (6a, 6b, 6c) entre elles.

5. Procédé de fabrication selon l'une quelconque des revendications 1 à 4, caractérisé en que l'étape de réalisation (33) d'une ébauche (10a) de l'élément horloger (10b) comprend une sous-étape de surmoulage (36) par injection de la matière injectable dans la cavité (5) du moule (2).

6. Procédé de fabrication selon la revendication précédente, **caractérisé en ce que** la sous-étape de surmoulage (36) comprend une phase d'injection (39) de la matière injectable dans la cavité (5).

7. Procédé de fabrication selon l'une des revendications 5 et 6, **caractérisé en ce que** la sous-étape de surmoulage (36) comprend une phase de régulation de la température (38) dudit moule (2) notamment durant une période s'étalant avant le début de la phase d'injection (39) de matière injectable dans la cavité (5) jusqu'à la fin de cette phase injection (39) de matière voire après cette fin de cette phase d'injection (39).

8. Procédé de fabrication selon l'une des revendications 5 à 7, **caractérisé en ce que** la sous-étape de surmoulage (36) comprend une phase de mise sous vide (37) de ladite cavité (5) avant la phase d'injection (39) de la matière injectable dans cette cavité (5).

9. Procédé de fabrication selon l'une quelconque des revendications 1 à 8, **caractérisé en ce que** l'étape de finalisation (40) de l'élément horloger (10b) comprend une sous-étape d'application (41) d'un revêtement sur ladite ébauche (10a) de cet élément horloger (10b) surmoulée sur la deuxième pièce (6b) prévoyant une phase de dépôt (43) de matière décorative et/ou fonctionnelle sur la face externe visible de cette ébauche (10a).

## Patentansprüche

1. Herstellungsverfahren mindestens eines Uhrenbauteils (10b), insbesondere einer Applike, das zum Aufbringen auf ein Uhrenbauteil (110), beispielsweise ein Zifferblatt einer Uhr (100), vorgesehen ist, wobei das Verfahren folgende Schritte umfasst:
- Ausarbeitung (30) eines Formabdrucks (3) in einem ersten Formeinsatz (6a) auf der Grundlage eines Originalteils, das das herzustellende Uhrenbauteil (10b) repräsentiert, wobei diese Ausarbeitungsstufe (30) einen Teilschritt zur Gestaltung (31) des genannten Originalteils umfasst, der unter Anwendung eines Lithografieverfahrens erfolgt;
- Herstellung (33) eines Rohlings (10a) des Uhrenbauteils (10b) durch Überformung mittels Einspritzung eines verarbeitbaren Materials in mindestens einen Hohlraum (5) eines Werkzeugs (2), der zur Formgebung des zu fertigenden Uhrenbauteils (10b) vorgesehen ist, wobei der Hohlraum durch das Zusammenwirken des Abdrucks (3) des ersten Formeinsatzes (6a) mit einem zweiten Formeinsatz (6b) dieser Gießform (2) gebildet wird, wobei letzterer (6b) eine Einlassöffnung (9) zur Einspritzung des Materials in den Hohlraum (5) aufweist;
- Finalisierung (40) des Uhrenbauteils (10b), umfassend einen Teilschritt (41) zum Aufbringen einer Beschichtung auf die genannte Vorform (10a) des Uhrenbauteils (10b), die auf dem zweiten Formeinsatz (6b) überformt ist, wobei dieser Teilschritt (41) eine Phase des Auseinandernehmens/Entfernens (42) des ersten Formeinsatzes (6a) vom zweiten Formeinsatz (6b) umfasst, **dadurch gekennzeichnet, dass** der Teilschritt (41) des Aufbringens einer Beschichtung eine Phase der Abscheidung (43) eines dekorativen und/oder funktionalen Materials auf der sichtbaren Außenfläche der auf dem zweiten Formeinsatz (6b) überformten Vorform (10a) umfasst, und dass das Verfahren den folgenden zusätzlichen Schritt aufweist:
- Entnahme (44) des fertiggestellten Uhrenbauteils (10b) aus dem zweiten Formeinsatz (6b), umfassend einen Teilschritt (45) zum Abtrennen eines Einspritzpunkts (11), der das genannte Uhrenbauteil (10b) mit dem zweiten Formeinsatz (6b) verbindet, wobei dieser Einspritzpunkt (11) das auf dem zweiten Formeinsatz (6b) hergestellte Uhrenbauteil (10b) mit einem Angusszapfen (18) der Gießform (2) verbindet, und zwar im Hinblick auf dessen spätere Montage auf der Uhrwerkskomponente (110).

2. Verfahren nach dem vorhergehenden Anspruch, **dadurch gekennzeichnet, dass** das eingesetzte Lithografieverfahren aus den folgenden Technologien ausgewählt ist: optische UV-Projektionslithografie, DUV-Projektionslithografie, Immersionslithografie, Doppelbelichtungslithografie, EUV-Lithografie oder Nanoimprint-Lithografie.

3. Herstellungsverfahren nach einem der Ansprüche 1 oder 2, **dadurch gekennzeichnet, dass** der Ausarbeitungsschritt (30) einen Teilschritt der Replikation (32) des Originalbauteils umfasst, wobei der Abdruck (3) durch die Reproduktion einer Negativform des Originalbauteils unter Einsatz von Replikationstechniken wie Ni-Shims oder Bulk-Metallglas (BMG) hergestellt wird.

4. Herstellungsverfahren nach einem der Ansprüche 1 bis 3, **dadurch gekennzeichnet, dass** der Herstellungsschritt (33) eines Rohlings (10a) des Uhrenbauteils (10b) einen Teilschritt (34) zur Ausbildung der Gießform (2) durch Zusammenfügen einer ersten, zweiten und dritten Formkomponente (6a, 6b, 6c) umfasst.

5. Herstellungsverfahren nach einem der Ansprüche 1 bis 4, **dadurch gekennzeichnet, dass** der Herstellungsschritt (33) eines Rohlings (10a) des Uhrenbauteils (10b) einen Teilschritt des Überformens (36) umfasst, bei dem ein formbares Material in den Hohlraum (5) der Form (2) eingespritzt wird.

6. "Herstellungsverfahren nach dem vorhergehenden Anspruch, **dadurch gekennzeichnet, dass** der Teilschritt des Überformens (36) eine Einspritzphase (39) des einspritzbaren Materials in den Hohlraum (5) umfasst."

7. Herstellungsverfahren nach einem der Ansprüche 5 oder 6, **dadurch gekennzeichnet, dass** der Teilschritt des Überformens (36) eine Phase der Temperaturregelung (38) der genannten Form (2) umfasst, insbesondere während eines Zeitraums, der sich von vor Beginn der Einspritzphase (39) des formbaren Materials in den Hohlraum (5) bis zum Ende dieser Einspritzphase (39) und gegebenenfalls darüber hinaus erstreckt.

8. Herstellungsverfahren nach einem der Ansprüche 5 bis 7, **dadurch gekennzeichnet, dass** der Teilschritt des Überformens (36) eine Vakuumierungsphase (37) des genannten Hohlraums (5) vor der Einspritzphase (39) des formbaren Materials in diesen Hohlraum (5) umfasst.

9. Herstellungsverfahren nach einem der Ansprüche 1 bis 8, **dadurch gekennzeichnet, dass** der Finalisierungsschritt (40) des Uhrenbauteils (10b) einen Teilschritt (41) zum Aufbringen einer Beschichtung auf die genannte, auf dem zweiten Formeinsatz (6b) überformte Vorform (10a) dieses Uhrenbauteils (10b) umfasst, wobei dieser Teilschritt (41) eine Phase zum Auftragen (43) eines dekorativen und/oder funktionalen Materials auf die sichtbare Außenfläche dieser Vorform (10a) vorsieht.

## Claims

1. Method for manufacturing at least one timepiece element (10b), in particular an applique, intended to be mounted on a timepiece component (110) such as a dial of a timepiece (100), said method comprising the steps of:
- developing (30) the impression (3) in the first part (6a) from an original part relating to the timepiece element (10b) having to be manufactured, said development step (30) comprising a substep of designing (31) said original part implemented from a lithography technique
- producing (33) a blank (10a) of the timepiece element (10b) from an injection overmoulding of injectable material into at least one cavity (5) of a mould (2) defined for the development of the timepiece element (10b) to be manufactured, said cavity being defined by the association of the impression (3) of the first part (6a) of the mould (2) with a second part (6b) of said mould (2), said second part (6b) comprising an inlet orifice (9) of the cavity (5) for injecting said material into said cavity (5);
- finishing (40) the timepiece element (10b) comprising a substep of applying (41) a coating on said blank (10a) of said timepiece element (10b) overmoulded on the second part (6b), said substep (41) comprising a phase of disassembling/withdrawing (42) the first part (6a) from the second part (6b) **characterised in that** the substep of applying (41) a coating comprises a phase of depositing (43) the decorative and/or functional material on the visible outer face of the blank (10a) of the timepiece element (10b) overmoulded on said second part (6b), and **in that** the method comprises the following further step:
- withdrawing (44) the finished timepiece element (10b) from the second part (6b) comprising a substep of breaking (45) an injection point (11) connecting said timepiece element (10b) to the second part (6b) and this, in anticipation of the mounting thereof on the timepiece component (110), this injection point (11) provides the holding of the timepiece element (10b) manufactured on the second part (6b) by connecting same to a sprue (18) formed in said mould (2).

2. Method according to the previous claim, **characterised in that** said lithography technique is chosen from the following techniques: ultra-violet projection optical lithography, DUV projection optical lithography, immersion lithography, double exposure lithography, extreme ultra-violet lithography, nanoprinting lithography.

3. Manufacturing method according to any one of claims 1 and 2, **characterised in that** the development step (30) comprises a substep of replicating (32) the original part aiming to produce the impression (3) by reproducing a negative form of the original part implementing Ni shims or BMG replication techniques.

4. Manufacturing method according to any one of claims 1 to 3, **characterised in that** the step of producing (33) a blank (10a) of the timepiece element (10b) comprises a substep of forming (34) the mould (2) by mutually assembling first, second and third parts (6a, 6b, 6c).

5. Manufacturing method according to any one of claims 1 to 4, **characterised in that** the step of producing (33) a blank (10a) of the timepiece element (10b) comprises a substep of injection overmoulding (36) the injectable material into the cavity (5) of the mould (2).

6. Manufacturing method according to the preceding claim, **characterised in that** the overmoulding sub-step (36) includes a phase of injecting (39) the injectable material into the cavity (5).

7. Manufacturing method according to one of claims 5 and 6, **characterised in that** the overmoulding substep (36) comprises a phase of controlling the temperature (38) of said mould (2) in particular during a period extending from before the start of the phase of injecting (39) injectable material into the cavity (5) to the end of said material injection phase (39) or even after said injection phase (39).

8. Manufacturing method according to one of claims 5 to 7, **characterised in that** the overmoulding substep (36) comprises a phase of placing under a vacuum (37) said cavity (5) before the phase of injecting (39) the injectable material into said cavity (5).

9. Manufacturing method according to any one of claims 1 to 8, **characterised in that** the step of finishing (40) the timepiece element (10b) comprises a substep of applying (41) a coating on said blank (10a) of said timepiece element (10b) overmoulded on the second part (6b) providing for a phase of depositing (43) decorative and/or functional material on the visible outer face of said blank (10a).
